# EUROPEAN PATENT SPECIFICATION

(11) **EP 1 580 132 B1**
(45) Date of publication and mention of the grant of the patent: **31.05.2006**
(21) Application number: 05251285.2
(22) Date of filing: 03.03.2005
(51) Int. Cl.: B65B 55/20, B65G 51/02

(54) **Overhead packaging cushion supply system**
Von oben beschickbare Verteilungsvorrichtung für Dämpfungselemente
Système vertical d'alimentation d'éléments d'amortissement

(30) Priority: 24.03.2004 US 808163
(43) Date of publication of application: 28.09.2005
(73) Proprietor: Sealed Air Corporation (US), Saddle Brook, New Jersey 07663 (US)
(72) Inventor: Sadakierski, Walter C., Shrewsbury, Vermont 05738 (US); Vanhuis, Paul R., Whitehall, New York 12887 (US)
(74) Representative: Price, Nigel John King

(56) References cited:
- EP-A- 1 013 573
- US-B1- 6 453 644

## Description

### BACKGROUND OF THE INVENTION

The present invention relates to systems for providing packaging cushions to a hopper. Such systems are known e.g from document EP-A-1 013 573.

Packaging dunnage material may be used to fill the void spaces in a box containing a packaged article. One type of packaging dunnage material is air-filled dunnage cushions, which may be provided as a string of air-filled cushions with perforations between cushions. The packer selects the desired number of cushions to be inserted as dunnage in the box, and manually tears the perforations to separate a selected section of cushions from the string.

Businesses that package and ship numerous articles may have several packing stations at which packers insert the dunnage cushions in boxes along with the articles to be packaged. The plant space at which this packaging occurs may be cramped because of the equipment and materials used to deliver, package, and ship the articles.

### SUMMARY OF THE INVENTION

The present invention may address one or more of the aforementioned problems. A system for supplying packaging cushions manufactured from cushion feedstock comprises a lift, a cushion-supply machine moveably supported by the lift, and a hopper. The hopper defines an entrance opening for receiving packaging cushions from the cushion-supply machine into the hopper, and an exit opening for withdrawing cushions from the hopper. The elevation of the hopper entrance opening is higher than the elevation of the hopper exit opening. The cushion-supply machine is capable of manufacturing packaging cushions from cushion feedstock. The cushion-supply machine defines a cushion outlet. The lift is adapted to move the cushion-supply machine between a supply position, in which the elevation of the cushion outlet is higher than the elevation of the hopper entrance opening, and a reload position, in which the elevation of the cushion-supply machine cushion outlet is lower than the elevation of the hopper entrance opening.

These and other objects, advantages, and features of the invention will be more readily understood and appreciated by reference to the detailed description of the invention and the drawings.

### BRIEF DESCRIPTION OF THE DRAWINGS

FIG. 1 is a representational perspective view of one embodiment of a packaging cushion supply system of the present invention comprising a jackscrew lift and having the cushion-supply machine in the supply position;
FIG. 2 is a representational perspective view of the packaging cushion supply system of Figure 1 having the cushion-supply machine in the reload position;
FIG. 3 is a representational partial sectional view taken along the line 3-3 of Figure 1;
FIG. 4 is a representational partial sectional view taken along the line 4-4 of Figure 1;
FIG. 5 is a representational perspective view of another embodiment of the present invention comprising a hydraulic lift and the cushion-supply machine in the reload position a representational partial sectional view taken along the line 5-5 of Figure 2;
FIG. 6 is a representational partial sectional view taken along the line 6-6 of Figure 2;
FIG. 7 is a representational perspective view of another embodiment of the present invention having the hopper completely supported by the lift, showing by dark lines the cushion-supply machine in the reload position, and by phantom lines the cushion-supply machine in the supply position;
FIG. 8 is a representational perspective view of another embodiment comprising a hoist lift, showing by dark lines the cushion-supply machine in the reload position, and by phantom lines the cushion-supply machine in the supply position;
FIG. 9 is a representational partial sectional view taken along the line 9-9 of Figure 8;
FIG. 10 is a representational perspective view of another embodiment comprising a hydraulic lift and the cushion-supply machine in the reload position; and
FIG. 11 is a representational perspective view of the embodiment of Figure 10 showing the lift in the extended position and the cushion-supply machine in the supply position.

Like elements in different drawings may use the same reference number.

### DETAILED DESCRIPTION OF THE INVENTION

A system 10 for providing packaging cushions may comprise a cushion-supply machine 20, a lift 22, and a hopper 24.

### Cushion-Supply Machine

Cushion-supply machine 20 is capable of manufacturing cushions 26 from cushion feedstock 28. The cushions 26 may be in the form of a string of packaging cushions 30, in which each cushion 26 of the string of packaging cushions 30 is connected to at least one other adjoining cushion of the string. The string of packaging cushions 30 may include perforations 32 (Figs. 3-4) between adjacent cushions 26 of the string 30 to facilitate separation of the string into string segments or into one or more individual cushions. "Perforations" as used herein includes scoring or other lines of weakening adapted for the purpose of facilitating separation of the string of packaging cushions. The string of packaging cushions 30 may comprise air-filled cushions, foam-filled cushions, as well as cushions comprising other types of packaging materials. Such cushions may be useful in or adapted for packaging dunnage applications. An exemplary string of air-filled dunnage cushions is sold under the Fill-Air 1000® trademark by Sealed Air Corporation.

Cushion-supply machine 20 defines a cushion outlet 34, which is the site at which the creation of each new cushion 26 (e.g., in string of packaging cushions 30) is completed by machine 20. Machine 20 may comprise feedstock holder 36, which may be adapted to support an inventory of cushion feedstock 28 as the feedstock is converted by machine 20 into cushions 26. Such an inventory of cushion feedstock may be in roll form, as illustrated. The cushion feedstock 28 may comprise a flexible film or web configuration. The film may be monolayer or multilayer and may be made, for example, by thermoplastic extrusion or coextrusion processes. The cushion feedstock 28 may comprise one or a plurality of pre-formed, partially completed cushions. The cushion feedstock may comprise a film folded over on itself (e.g., centerfolded) in a lengthwise direction to establish top and bottom films, and/or may comprise separate top and bottom films sealed together along one edge in the lengthwise (i.e., machine) direction. The cushion feedstock may comprise top and bottom films having a plurality of transverse seals adhering the top and bottom films together to pre-establish at least a portion of the peripheral boundaries that will define cushion 26 upon its completion.

Cushion feedstock 28 may comprise any flexible material that may be manipulated by cushion-supply machine 20 to form cushions 26. The feedstock may comprise one or more thermoplastic materials, for example, one or more of polyethylene homopolymers, polyethylene copolymers, polypropylene homopolymers, and polypropylene copolymers (e.g., propylene/ethylene copolymer), polyesters, polystyrenes, polyamides, and polycarbonates. Useful polyethylene homopolymers include low density polyethylene (LDPE) and high density polyethylene (HDPE). Useful polyethylene copolymer include ionomers, EVA, EMA, heterogeneous (e.g., Zeigler-Natta catalyzed) ethylene/alpha-olefin copolymers, and homogeneous (e.g., metallocene, single-cite catalyzed) ethylene/alpha-olefin copolymers. Ethylene/alpha-olefin copolymers are copolymers of ethylene with one or more comonomers selected from C3 to C20 alpha-olefins, such as 1-butene, 1-pentene, 1-hexene, 1-octene, methyl pentene, in which the polymer molecules comprise long chains with relatively few side chain branches, including linear low density polyethylene (LLDPE), linear medium density polyethylene (LMDPE), very low density polyethylene (VLDPE), and ultra-low density polyethylene (ULDPE).

Machines for manufacturing cushions are known in the art. An exemplary cushion-supply machine 20 for manufacturing a string of packaging cushions 30 is the Fill-Air 1000® machine available from Sealed Air Corporation. Further examples of cushion feedstock, strings of packaging cushions, and cushion-supply machines are disclosed in U.S. Patents 5,942,076 to Salerno; 6,460,313 to Cooper; 6,582,800 to Fuss et al; 6,598,373 to Sperry et al; 6,605,169 to Perkins et al; 6,651,406 to Sperry et al; and 6,659,150 to Perkins et al.

### Lift

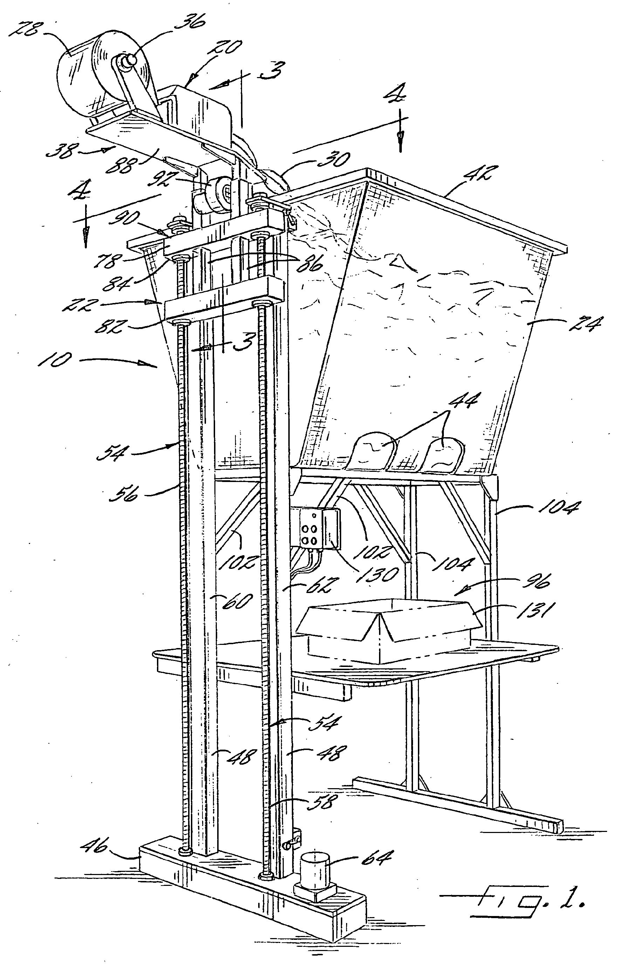

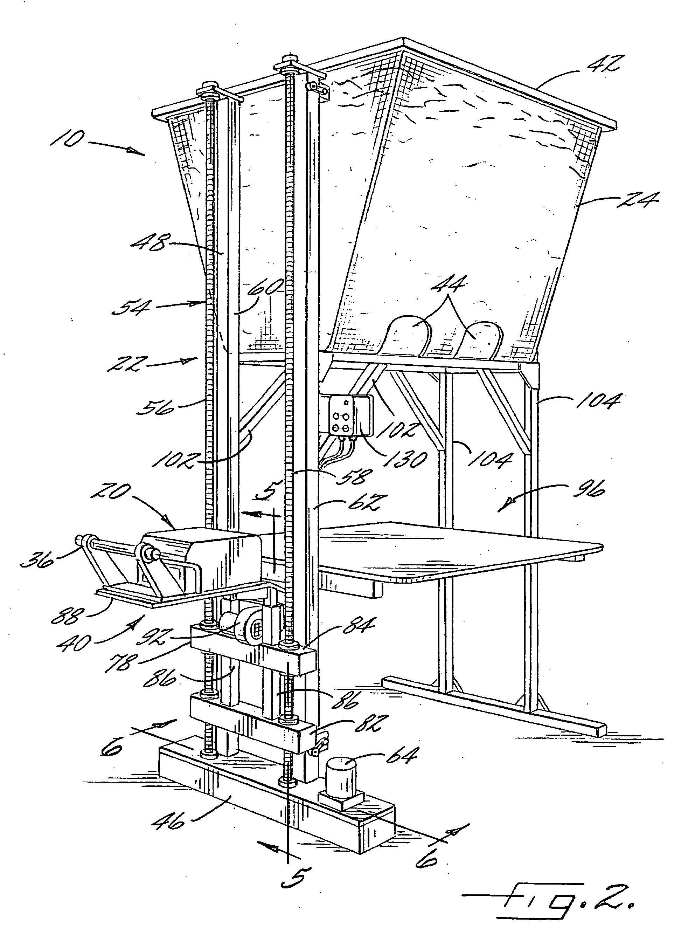

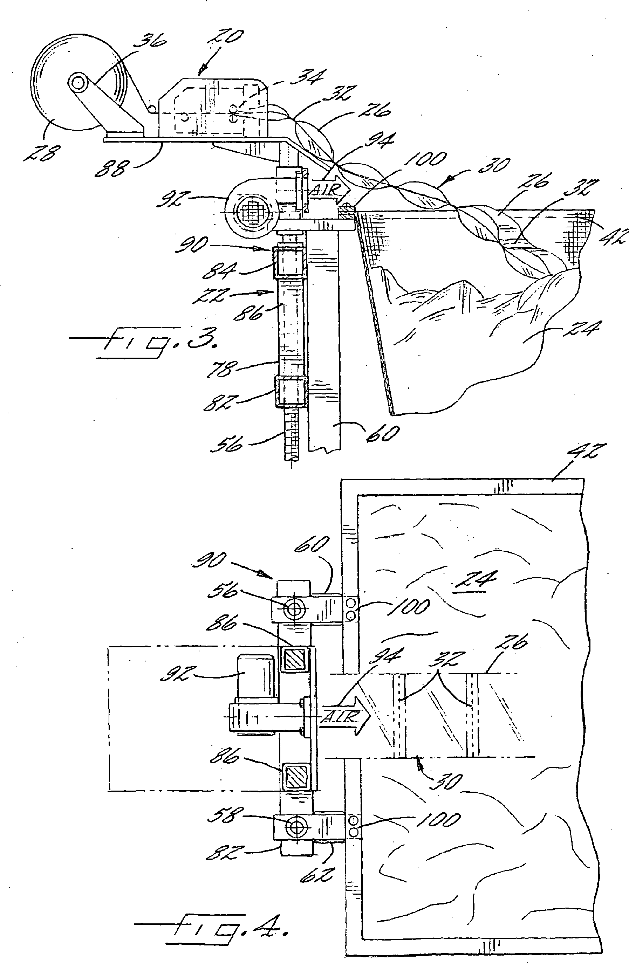

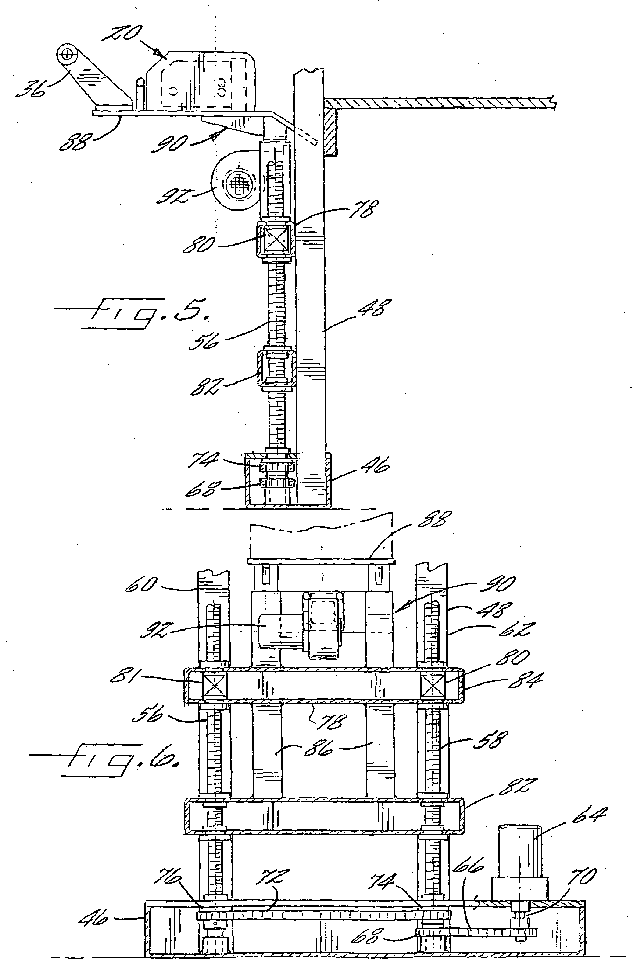

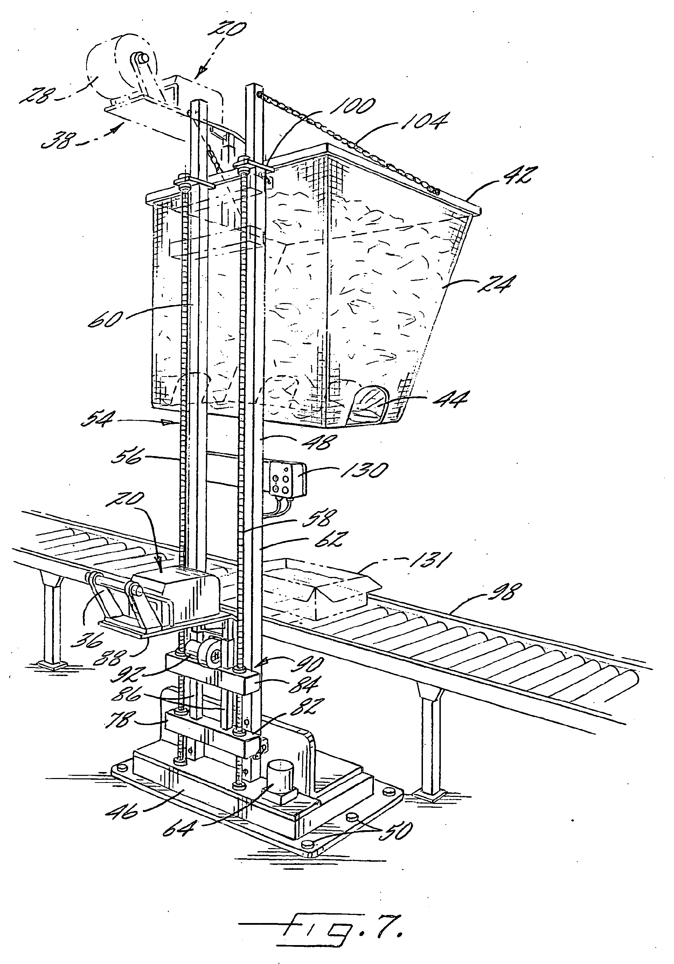

The lift 22 moveably supports the cushion-supply machine 20. The lift 22 is adapted to move the cushion-supply machine 20 between a supply position 38 (Figs. 1, 3), in which the elevation of the cushion outlet 34 is higher than the elevation of the hopper entrance opening 42 (discussed below), and a reload position 40, in which the elevation of the cushion outlet 34 is lower than the elevation of the hopper entrance opening 42 (Fig. 2).

In the reload position 40, the feedstock holder 36 may be manually accessible from ground level to replenish or reload an inventory of cushion feedstock 28 onto feedstock holder 36. For example, in the reload position 40, the feedstock holder may be less than about any of the following values above ground level: 213,36 cm; 182,88 cm ; 152,4 cm and 121,92 cm (7 feet, 6 feet, 5 feet, and four feet) Further, the elevation of cushion outlet 34 when the cushion-supply machine 20 is in the reload position 40 may be lower than the elevation of the cushion outlet 34 when machine 20 is in the supply position 38 by at least about any of the following values: 152,4 cm ; 182,88 cm ; 213,36 cm ; 243,84 cm ; 304,8 cm ; 365,76 cm ; and 457,2 cm (5 feet, 6 feet, 7 feet, 8 feet, 10 feet, 12 feet, and 15 feet). Also, the elevation of the cushion supply outlet 34 in the reload position 40 may be below the elevation of the hopper exit opening 44 (discussed below).

Lift 22 may comprise any of a jackscrew lift, a hoist lift, and/or a hydraulic lift. In all of the drawings the lift is generally referred to by the numbering "lift 22" without regard to which of the mechanical principles upon which the lift is based or configured (e.g., jackscrew, hoist, hydraulics). Generally, a jackscrew lift may utilize a screw or threaded gear arrangement to raise and lower a load; a hoist lift may utilize one or more cables, ropes, chains, or lines in conjunction with one or more pulleys and/or counterweights to raise and lower a load, for example, in a block and tackle configuration or roped elevator configuration; and a hydraulic lift may utilize one or more hydraulic piston systems to raise and lower a load.

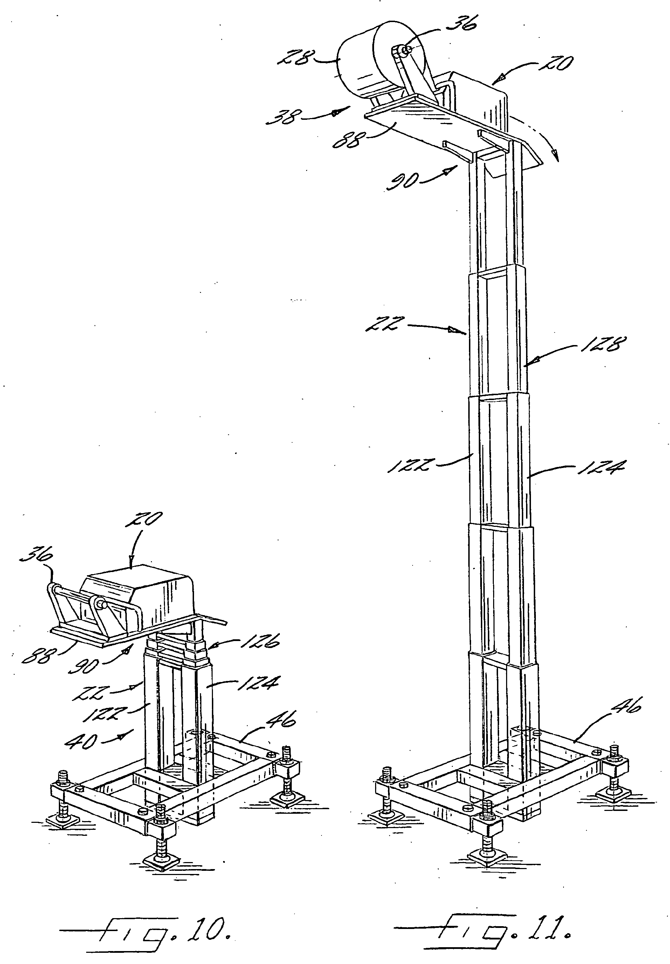

An exemplary jackscrew lift embodiment of lift 22 is illustrated in Figures 1-7; an exemplary hoist lift embodiment is illustrated in Figures 8-9; and an exemplary hydraulic lift embodiment is illustrated in Figures 10-11. Similar elements in each embodiment may be identified by the same number.

### Jackscrew Lift

Turning to a jackscrew lift embodiment (Figs. 1-7), lift 22 may comprise lift base 46 supporting tower frame 48 which may extend from lift base 46. Lift base 46 may comprise sufficient weight to support lift 22 in an upright position without attachment to the floor or ground level. Lift base 46 may be affixed to the floor or ground level, for example, by one or more fasteners 50 (e.g., bolts, screws, rivets), as shown in Figure 7.

Tower frame 48 of lift 22 may rotatably support one or more screws 54, such as left screw 56 and right screw 58. The top end of each of left screw 56 and right screw 58 may be rotatably supported at or near the top of left tower 60 and right tower 62, respectively. The bottom end of each of left screw 56 and right screw 58 may be rotatably supported by lift base 46 (as shown) or by the corresponding left or right tower. The left and right screws may be supported at the top so that they are in tension (i.e., so that the screws hang in tension rather than stand in compression). Each of the screws 54 comprise a thread (e.g., a helical rib) extending an effective distance along its length.

The right screw 58 may be rotated, for example, by motor 64 adapted to rotate one or more of screws 54, for example by having first drive chain, belt, or gear arrangement 66 translating rotational energy from the drive shaft 70 of the motor 64 to the driven pulley 68 that may be attached at or near the bottom of right screw 58. The left screw 56 may be rotated, for example, by a second drive chain or belt 72 engaging pulleys 74 and 76, which may be attached to right and left screws 58, 56 respectively, to indirectly translate rotational energy from motor 64 to left screw 56 as right screw 58 rotates.

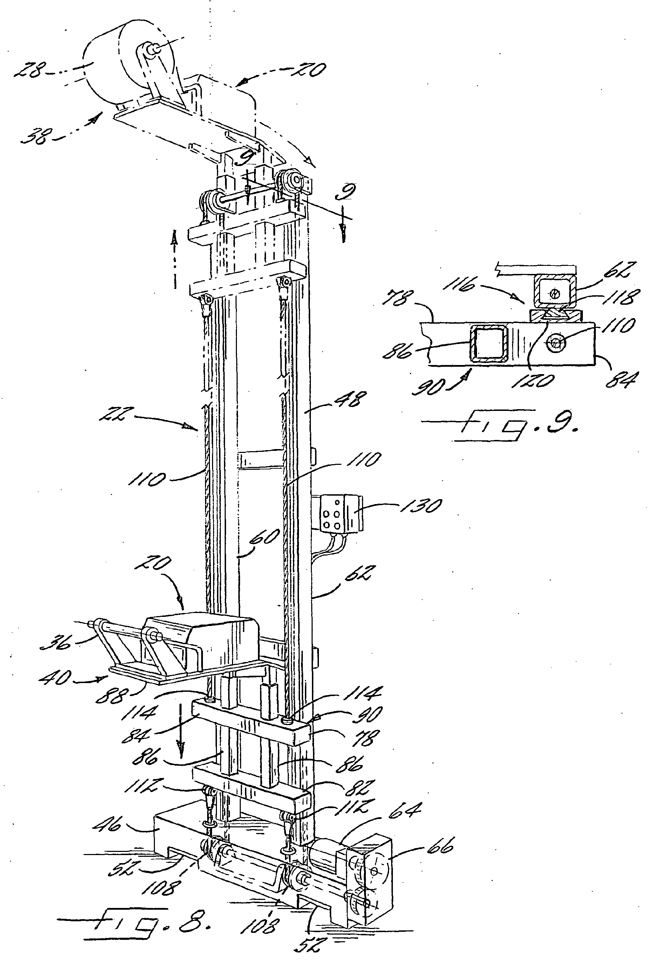

Lift 22 may comprise platform 90, which may comprise platform frame 78 and platform shelf 88. Platform frame 78 may be supported by one or more of the screws 54. The platform frame 78 may engage the screw and be adapted so that rotation of the screw in a first direction causes the platform 90 to rise and rotation of the screw in a second direction opposite the first direction causes the platform 90 to lower. For example, the screw 54 may be threaded through nut 80 (Fig. 5) that is fixedly attached to platform frame 78 so that the platform frame 78 is supported by the engagement of nut 80 with the threads of screw 54, and rotation of the screw causes nut 80 to raise and lower along the threads of the screw, thereby raising and lowering platform 90. Platform 90 may also slideably engage the tower frame 48 so that the tower frame may help stabilize and align the platform as it is raised and lowered.

The platform frame 78 may include one or more of lower cross member 82 and upper cross member 84 connected by one or more of tie members 86. The screws 54 extend through the lower and upper cross members 82, 84 of the platform frame 78. As illustrated, right nut 80 may be fixedly attached to the right end of upper cross member 84 and engages right screw 58; nut 81 (Fig. 6) may be fixedly attached to the left end of upper cross member 84 and engage left screw 56 so that the platform may be raised and lowered by both the left and right screws operating in tandem. For example, rotation of the right screw 58 in a first right screw direction may cause the platform frame 78 to raise and rotation of the right screw 58 in a second right screw direction opposite the first right screw direction may cause the platform frame 78 to lower. Also, rotation of the left screw 56 in a first left screw direction may cause the platform frame 78 to raise and rotation of the left screw 56 in a second left screw direction opposite the first left screw direction causes the platform frame 78 to lower.

Although the jackscrew embodiment illustrated in the drawings illustrates a fixed nut with a rotating screw, it is also envisioned that the raising and lowering of the platform may be accomplished by a jackscrew arrangement in which the screw is fixed and the nut rotates. Also, in the embodiments illustrated in the drawings, the lower cross member 82 and the tie members 86 serve to provide structural stability to the platform frame. It is envisioned that the lower cross member could also support one or more nuts to engage the screws 54 either in conjunction with or in lieu of the nuts 80 of the upper cross member 84.

Platform frame 78 may support platform shelf 88 of platform 90. The platform shelf 88, in turn, may support the cushion-supply machine 20, so that the cushion-supply machine 20 is raised and lowered as platform 90 is raised and lowered.

### Hoist Lift

Turning to a hoist lift embodiment (Figs. 8-9), lift 22 may comprise lift base 46 supporting tower frame 48 which may extend from lift base 46. Lift base 46 may define one or more fork or pallet jack receptacles 52 (Figure 8), configured to facilitate the receipt of one or more of the forks of a forklift or the legs of a pallet jack, which may be used in lifting and moving lift 22 during installation.

Lift 22 may comprise one or more cable members 110 moveably supported by tower frame 48 and engaging platform 90. The one or more cable members may be adapted to raise the platform 90 to place the cushion-supply machine in the supply position 38 and to lower the platform 90 to place the cushion-supply machine 20 in the reload position 40.

For example, tower frame 48 may rotatably support one or more upper pulleys 106 at or near the top of left tower 60 and right tower 62, and one or more lower pulleys 108 at or near the bottom of left and right towers 60, 62. The one or more cable members 110 may extend around upper pulleys 106 and lower pulleys 108. Each of the cable members 110 may have a first cable end 112 affixed to platform 90 and a second cable end 114 affixed to platform 90, the second cable end being opposite the first cable end.

Cable member 110 may comprise one or more of cable, rope, chain, wire, or line, for example in twisted or braided configuration. Cable member 110 may comprise metal, such as steel. Cable member 110 may be capable of supporting the weight of platform 90 and any components supported by the platform.

One or more of the lower pulleys or sheaves 108 may be rotated, for example, by motor 64 adapted to rotate the pulleys, for example by having first drive chain, belt, or gear arrangement 66 for translating rotational energy from the motor 64 to the lower pulleys. The lower pulleys or sheaves 108 may be adapted to frictionally engage or grip the cable member 110 as it passes through the pulley in order to move the cable member as the pulley moves and thus also move the platform 90 supported by and affixed to the cable member 110.

Rotation of the lower pulley 108 in a first direction causes the cable member 110 to raise the platform 90 and rotation of the lower pulley a second direction opposite the first direction causes the cable member 110 to lower platform 90. The movement of the platform 90 in turn raises or lowers cushion-supply machine 20 supported by platform 90.

Lift 22 may comprise guide member 116 comprising slot 120 and protrusion 118 that is slideably received by slot 120. Slot 120 may be formed by platform 90. Protrusion 118 may extend along the length of right tower 62. The guide member 116 may be adapted so that slot 120 and protrusion 118 cooperatively engage each other to reduce or restrict the non-vertical movement of the platform 90 as it is raised and lowered by cable member 110.

### Hydraulic Lift

Turning to a hydraulic lift embodiment (Figs. 10-11), lift 22 may comprise lift base 46 supporting one or more hydraulic jacks, for example, left hydraulic jack 122 and right hydraulic jack 124. As is known in the art, a hydraulic jack system comprises a fluid-driven piston mounted inside a cylinder. Each hydraulic jack 122, 124 may comprise a telescoping hydraulic jack system, comprising a series of pistons and cylinders, which are adapted to cooperate to move from a collapsed position 126 (Fig. 10) to an extended position 128 (Fig. 11). The hydraulic cylinders may be in fluid communication with a hydraulic fluid supply system (not shown) to power the lift. The hydraulic fluid supply system may comprise a pump, valve, and hydraulic fluid reservoir (not shown), as are known in the art. One hydraulic fluid system may power both the left and right hydraulic jacks 122, 124.

Each of the hydraulic jacks 122, 124 are adapted to move between an extended position 128 (Fig. 11), to elevate platform 90 and place the cushion-supply machine 20 in the supply position 38, and a collapsed position 126 (Fig. 10), to lower platform 90 and place the cushion-supply machine 20 in the reload position 40. An exemplary hydraulic lift is disclosed in U.S. Patent 5,181,693 to Lorenz.

### Blower

Blower 92 may be located downstream from the cushion outlet 34 of the cushion-supply machine 20 and upstream from the hopper entrance opening 42. (Figs. 1, 3-4.) Blower 92 may be adapted to provide an airflow 94 to assist movement of the packaging cushions 26 from the cushion outlet 34 to the hopper entrance opening 42. Blower 92 may be supported by platform 90, for example, beneath shelf 88.

The pathway from the cushion outlet 34 to the hopper entrance opening 42 may be unenclosed so that the cushions 26 do not pass through a duct or other fully enclosed member before entering the hopper 24.

### Hopper

Hopper 24 is adapted to store packaging cushions 26, for example, string of packaging cushions 30. Hopper 24 may comprise a mesh basket to hold the cushions 26. Hopper 24 defines an entrance opening 42 for receiving packaging cushions 26 from the cushion-supply machine 20 into hopper 24. Hopper 24 also defines one or more exit openings 44 for withdrawing cushions 26 from hopper 24. The elevation of hopper entrance opening 42 is higher than the elevation of the one or more hopper exit openings 44.

Hopper 24 may be elevated above a packing station 96, for example, elevated so that the hopper exit opening 44 is about shoulder height to facilitate access. For example, one or more hopper exit openings 44 may be at least about any of the following distances above ground level: 3 feet, 4 feet, 5 feet, and 6 feet. Packing station 96 may be under hopper 24. (Figs. 1-2.) Conveyor 98 may be under hopper 24. (Fig. 7.)

Hopper 24 may be unsupported by the lift 22, for example, so that the hopper 24 is free standing. Alternatively, hopper 24 may be at least partially supported by the lift 22, for example, portions of hopper 24 may be affixed to the lift by fasteners 100, other portions of hopper 24 may be supported by struts 102 extending from tower frame 48 to hopper 42, and stil other portions of hopper 24 may be supported by legs 104 extending from hopper 24 to the ground level. (Figs. 1-4.)

Hopper 24 may be completely supported by the lift 22, for example, so that any support member that bears or supports any significant amount of weight of hopper 24 transfers such weight load to lift 22 (Fig. 7.) For example, portions of hopper 24 may be affixed to the lift by fasteners 100, and/or one or more support members 104 may extend from tower frame 48 to hopper 24. Support members 104 may comprise flexible chain, rope, or cable, or may comprise a relatively inflexible rod or strut.

### Controller

Controller 130 may control (e.g., turn on or off) motor 64 or the hydraulic fluid supply system in order to raise and lower lift 22 to a desired position in response to input such as manual input by the operator. Controller 130 may also control the operation (e.g., on/off, speed) of the cushion-supply machine 20. Input/output connections and signal transmission lines between the controller 130 and the various sensors and controlled devices are not shown but are known to those skilled in the art. Controller 50 may comprise a programmable logic controller ("PLC").

One or more sensors (not shown) may be positioned in conjunction with the hopper 24 to detect whether the level of cushions 26 in the hopper is above or below a desired level. The sensors may send a signal to controller 130 regarding the status (e.g., the full/empty status) of the hopper 24. A sensor may comprise one or more of a photo-eye, an electric-eye, a photo-detector, and a corresponding reflector. Such sensors and their operation are known to those of skill in the art.

### Operation

An operator may activate lift 22 to place the cushion-supply machine 20 in the reload position 40. The operator may then load cushion-supply machine 20 with an inventory of cushion feedstock 28, for example, by installing a roll of cushion feedstock onto the feedstock holder 36. The loading step may be accomplished by a person standing at ground level. The operator may then activate lift 22 to place the cushion-supply machine 20 in supply position 38. The operator may then start the cushion-supply machine 20 to convert cushion feedstock 28 into cushions 26, for example string of cushions 30.

The manufactured cushions exit cushion outlet 34 of the machine and feed into hopper 24 through the hopper entrance opening 42. In doing so, the cushions may travel (i.e., by "falling" or by gravity flow) along an unenclosed pathway from the cushion outlet 34 to the hopper entrance opening 42. If the cushions 26 are configured as string of cushions 30, then the later-produced cushions in the string may help push the earlier-produced cushions in the string into the hopper 24. Blower 92 may produce an airflow 94 to help direct the cushions into the hopper 24.

An operator standing proximate packing station 96 may reach to exit opening 44 of hopper 26 to withdraw a desired number of cushions 26 for insertion as dunnage, bracing, or protective material into box 130, along with the product to be packaged. The operator may manually tear the perforations 32 to separate a selected section of cushions from a string of packaging cushions 30.

A sensor (discussed above) installed in hopper 24 may signal controller 130 to automatically stop the cushion-supply machine 20 if the level of cushions 26 in hopper 24 rises above a desired level. Another sensor installed in hopper 24 may signal controller 130 to automatically start the cushion-supply machine 20 if the level of cushions 26 in hopper 24 falls below a desired level.

Once the cushion-supply machine 20 has depleted the inventory of cushion feedstock 28 below a desired level (e.g., runs empty of cushion feedstock), then controller 130 may automatically stop the cushion-supply machine, or the operator may stop the cushion-supply machine, for example, by manually engaging controller 130. The operator may then activate lift 22 to place the cushion-supply machine 20 in the reload position 40 so the machine may again be loaded with cushion feedstock 28.

The above descriptions are those of preferred embodiments of the invention. Various alterations and changes can be made without departing from the spirit and broader aspects of the invention as defined in the claims, which are to be interpreted in accordance with the principles of patent law, including the doctrine of equivalents. Except in the claims and the specific examples, or where otherwise expressly indicated, all numerical quantities in this description indicating amounts of material, reaction conditions, use conditions, molecular weights, and/or number of carbon atoms, and the like, are to be understood as modified by the word "about" in describing the broadest scope of the invention. Any reference to an item in the disclosure or to an element in the claim in the singular using the articles "a," "an," "the," or "said" is not to be construed as limiting the item or element to the singular unless expressly so stated. The definitions and disclosures set forth in the present Application control over any inconsistent definitions and disclosures that may exist in an incorporated reference.

## Claims

1. A system (10) for supplying packaging cushions manufactured from cushion feedstock, the system comprising:
a lift (22);
a cushion-supply machine (20) moveably supported by the lift (22); and
a hopper (24) defining:
an entrance opening (42) for receiving packaging cushions (26) from the cushion-supply machine (20) into the hopper (24); and
an exit opening (44) for withdrawing cushions (26) from the hopper (24), wherein:
the elevation of the hopper entrance opening (42) is higher than the elevation of the hopper exit (44) opening;
the cushion-supply machine (20) is capable of manufacturing packaging cushions (26) from cushion feedstock (28) ;
the cushion-supply machine (20) defines a cushion outlet (34); and
the lift (22) is adapted to move the cushion-supply machine (20) between:
a supply position, in which the elevation of the cushion outlets (34) higher than the elevation of the hopper entrance opening (42); and
a reload position, in which the elevation of the cushion-supply machine cushion outlet (34) is lower than the elevation of the hopper entrance opening (42).

2. The system (10) of claim 1 wherein the cushion-supply machine (20) is adapted to manufacture a string of cushions.

3. The system (10) of claim 1 or 2 wherein
the cushion-supply machine (20) further comprises a feedstock holder (36) adapted to support an inventory of cushion feedstock (28) for manufacture into packaging cushions; and
in the reload position the feedstock holder (36) is manually accessible from ground level to replenish the inventory of cushion feedstock (28).

4. The system (10) of claim 3 wherein in the reload position the feedstock holder (36) is less than 213,36 cm above ground level.

5. The system (10) of any one of the preceding claims wherein the elevation of the cushion outlet (34) in the reload position is at least 152,4 cm lower than the elevation of the cushion outlet (34) in the supply position.

6. The system (10) of any one of the preceding claims wherein in the reload position, the elevation of the cushion outlet (34) is below the elevation of the hopper exit opening (44).

7. The system (10) of any one of the preceding claims further comprising a blower downstream from the cushion outlet (34) of the cushion-supply machine (20) upstream from the hopper entrance opening (42), wherein the blower is adapted to provide an airflow to assist movement of the packaging cushions from the cushion outlet to the hopper entrance opening (42).

8. The system (10) of claim 7 further comprising an unenclosed flow path for the cushions from the cushion outlet (34) of the cushion-supply machine (20) to the hopper entrance opening (42).

9. The system (10) of any one of the preceding claims wherein the lift (22) comprises a jackscrew lift.

10. The system (10) of any one of the preceding claims wherein the lift comprises:
a tower frame (48),
a screw rotatably supported by the tower frame (48);
a platform (90) supporting the cushion-supply machine (20), wherein the platform (90) engages the screw and is adapted so that rotation of the screw in a first direction causes the platform (90) to rise and rotation of the screw in a second direction opposite the first direction causes the platform (90) to lower.

11. The system (10) of claim 10 further comprising a motor adapted to rotate the screw.

12. The system (10) of any one of claims 1-9 wherein the lift (22) comprises:
a tower frame (48);
left and right screws rotatably supported by the tower frame (48);
a platform (90) supporting the cushion-supply machine, wherein the platform engages the left and right screws and is adapted so that rotation of the left and right screws in a first way causes the platform (90) to rise and rotation of the left and right screws in a second way opposite the first way causes the platform (90) to lower.

13. The system (10) of any one of the preceding claims wherein the lift (22) comprises a hoist lift.

14. The system (10) of any one of claim 1-9 wherein the lift comprises:
a tower frame (48);
a platform (90) supporting the cushion-supply machine (20); and
a cable member moveably supported by the tower frame and engaging the platform (90), wherein the cable member is adapted to raise the platform (90) to place the cushion-supply machine (20) in the supply position and to lower the platform (90) to place the cushion-supply machine (20) in the reload position.

15. The system (10) of any one of the preceding claims wherein the lift (22) comprises a hydraulic lift.

16. The system (10) of any one of the preceding claims wherein the hopper exit opening (44) is at least 91,44 cm above ground level.

17. The system (10) of any one of the preceding claims wherein the hopper (24) is at least partially supported by the lift (22), preferably wherein the hopper (24) is completely supported by the lift (22).

18. The system (10) of claim 1 further comprising a packing station or a conveyor under the hopper (24).

19. The system (10) of any one of the preceding claims wherein the lift (22) comprises one or more receptacles adapted to receive a member selected from a fork of a forklift and a leg of a pallet jack.

20. A method of providing packaging cushions utilizing the system of any one of the preceding claims, the method comprising in sequence:
activating the lift (22) to place the cushion-supply machine (20) in the reload position;
loading the cushion-supply machine (20) with cushion feedstock (28);
activating the lift (22) to place the cushion-supply machine (20) in the supply position; and
starting the cushion-supply machine (20) to manufacture packaging cushions into the hopper (24).

21. The method of claim 20 wherein the loading step is accomplished by a person standing on ground level.

22. The method of claim 20 or 21 wherein the cushion-supply machine (20) manufactures a string of packaging cushions into the hopper.

## Patentansprüche

1. System (10) zur Zufuhr von Verpackungskissen, die aus einem Kissengrundmaterial hergestellt werden, wobei das System aufweist:
einen Aufzug (22),
eine Kissenzufuhrmaschine (20), die beweglich von dem Aufzug (22) getragen wird, und
einen Einfülltrichter (24), der
eine Eintrittsöffnung (42) zur Aufnahme von Verpakkungskissen (26) aus der Kissenzufuhrmaschine (20) in den Einfülltrichter (24) und
eine Austrittsöffnung (44) zur Abgabe von Kissen (26) aus dem Einfülltrichter (24) definiert, wobei
die Höhe der Einfülltrichter-Eintrittsöffnung (42) höher als die Höhe der Austrittsöffnung (44) des Einfülltrichters ist,
die Kissenzufuhrmaschine (20) dazu in der Lage ist, Verpackungskissen (26) aus dem Kissengrundmaterial (28) herzustellen,
die Kissenzufuhrmaschine (20) einen Kissenauslass (34) definiert und
der Aufzug (22) dazu angepasst ist, die Kissenzufuhrmaschine zu bewegen zwischen
einer Zufuhrposition, in der die Höhe des Kissenauslasses (34) höher als die Höhe der Eintrittsöffnung (42) des Einfülltrichters ist, und
einer Ladeposition, in der die Höhe des Kissenauslasses (34) der Kissenzufuhrmaschine niedriger als die Höhe der Eintrittsöffnung (42) des Einfülltrichters ist.

2. System (10) nach Anspruch 1, wobei die Kissenzufuhrmaschine (20) dazu angepasst ist, eine Reihe von Kissen herzustellen.

3. System (10) nach Anspruch 1 oder 2, wobei
die Kissenzufuhrmaschine (20) weiter einen Grundmaterialhalter (36) aufweist, der dazu ausgestaltet ist, einen Vorrat an Kissengrundmaterial (28) zur Herstellung von Verpackungskissen bereitzuhalten, und
der Grundmaterialhalter (36) in der Ladeposition vom Bodenniveau aus manuell zugänglich ist, um den Vorrat an Kissengrundmaterial (28) aufzufüllen.

4. System (10) nach Anspruch 3, wobei in der Ladeposition der Grundmaterialhalter (36) weniger als 213,36 cm über dem Bodenniveau liegt.

5. System (10) nach einem der vorhergehenden Ansprüche, wobei die Höhe des Kissenauslasses (34) in der Ladeposition wenigstens 152,4 cm niedriger als die Höhe des Kissenauslasses (34) in der Zufuhrposition ist.

6. System (10) nach einem der vorhergehenden Ansprüche, wobei in der Ladeposition die Höhe des Kissenauslasses (34) niedriger als die Höhe der Austrittsöffnung (44) des Einfülltrichters ist.

7. System (10) nach einem der vorhergehenden Ansprüche, das weiter ein Gebläse stromabwärts des Kissenauslasses (34) der Kissenzufuhrmaschine (20) und stromaufwärts der Eintrittsöffnung (42) des Einfülltrichters aufweist, wobei das Gebläse dazu ausgestaltet ist, um einen Luftstrom bereitzustellen, um die Bewegung der Verpackungskissen von dem Kissenauslass zu der Eintrittsöffnung (42) des Einfülltrichters zu unterstützen.

8. System (10) nach Anspruch 7, das weiter einen nicht umschlossenen Durchlaufweg für die Kissen aus dem Kissenauslass (34) der Kissenzufuhrmaschine (20) zu der Eintrittsöffnung (42) des Einfülltrichters aufweist.

9. System (10) nach einem der vorhergehenden Ansprüche, wobei der Aufzug (22) einen Spindelaufzug aufweist.

10. System (10) nach einem der vorhergehenden Ansprüche, wobei der Aufzug aufweist:
ein Turmgerüst (48),
eine Spindel, die drehbar von dem Turmgerüst (48) getragen wird,
eine Plattform (90), die die Kissenzufuhrmaschine (20) trägt, wobei die Plattform (90) mit der Spindel eingreift und dazu angepasst ist, dass die Drehung der Spindel in einer ersten Richtung ein Anheben der Plattform (90) und
die Drehung der Spindel in eine zweite Richtung entgegen der ersten Richtung ein Absenken der Plattform (90) bewirkt.

11. System (10) nach Anspruch 10, das weiter einen Motor aufweist, der zum Drehen der Spindel ausgestaltet ist.

12. System (10) nach einem der Ansprüche 1 bis 10, wobei der Aufzug (22) aufweist:
ein Turmgerüst (48),
rechte und linke Spindeln, die drehbar von dem Turmgerüst (48) getragen werden,
eine Plattform (90), die die Kissenzufuhrmaschine trägt, wobei die Plattform mit der linken und der rechten Spindel in Eingriff steht und dazu angepasst ist, so dass, die Drehung der linken und rechten Spindeln in einer ersten Weise ein Anhaben der Plattform (90) bewirkt und die Drehung der linken und rechten Spindel in einer zweiten Weise entgegen der ersten Weise ein Absenken der Plattform (90) bewirkt.

13. System (10) nach einem der vorhergehenden Ansprüche, wobei der Aufzug einen Flaschenzug aufweist.

14. System (10) nach einem der Ansprüche 1 bis 9, wobei der Aufzug aufweist:
ein Turmgerüst (48),
eine Plattform (90), die die Kissenzufuhrmaschine (20) trägt, und
ein Seil, das beweglich von dem Turmgerüst (48) getragen wird und an der Plattform (90) eingreift, wobei das Seil dazu angepasst ist, die Plattform (90) anzuheben, um die Kissenzufuhrmaschine in die Zufuhrposition zu positionieren, und die Plattform (90) abzusenken, um die Kissenzufuhrmaschine (20) in die Ladeposition zu bringen.

15. System (10) nach einem der vorhergehenden Ansprüche, wobei der Aufzug (22) einen hydraulischen Aufzug aufweist.

16. System (10) nach einem der vorhergehenden Ansprüche, wobei die Austrittsöffnung (44) des Einfülltrichters sich wenigstens 91,44 cm über dem Bodenniveau befindet.

17. System (10) nach einem der vorhergehenden Ansprüche, wobei der Einfülltrichter (24) wenigstens teilweise von dem Aufzug (22) getragen wird, wobei der Einfülltrichter (24) vorzugsweise vollständig von dem Aufzug (22) getragen wird.

18. System (10) nach Anspruch 1, das weiter eine Packstation oder einen Förderer unter dem Einfülltrichter (24) aufweist.

19. System (10) nach einem der vorhergehenden Ansprüche, wobei der Aufzug (22) eine oder mehrere Aufnahmeöffnungen aufweist, die dazu angepasst ist, um ein Element ausgewählt aus einer Gabel eines Hubstaplers oder einem Schenkel eines Gabelstaplers aufzunehmen.

20. Verfahren zum Bereitstellen von Verpackungskissen unter Verwendung des Systems nach einem der vorhergehenden Ansprüche, wobei das Verfahren die Abfolge aufweist:
Aktivieren des Aufzugs (22), um die Kissenzufuhrmaschine (20) in der Ladeposition zu positionieren,
Einführen von Kissengrundmaterial (28) in die Kissenzufuhrmaschine (20),
Aktivieren des Aufzugs (22), die Kissenzufuhrmaschine (20) in der Zufuhrposition zu positionieren, und
Starten der Kissenzufuhrmaschine (20), um Verpackungskissen in den Einfülltrichter (24) zu liefern.

21. Verfahren nach Anspruch 20, wobei der Schritt des Einführens durch eine Person, die auf dem Bodenniveau steht, ausgeführt wird.

22. Verfahren nach Anspruch 21, wobei die Kissenzufuhrmaschine (20) eine Folge von Verpackungskissen in den Einfülltrichter bereitstellt.

## Revendications

1. Un système (10) pour alimenter en coussins d'emballage, fabriqués à partir d'un matériau pour coussin, le système comprenant:
- un élévateur (22),
- une machine (20) d'alimentation en coussins supportée de façon mobile par l'élévateur (20); et
- une trémie (24), définissant:
- une ouverture d'entrée (42) pour recevoir les coussins d'emballage (26) venant de la machine d'alimentation en coussins (20), dans la trémie (24) et,
- une ouverture de sortie (44) pour extraire des coussins (26) de la trémie (24), dans lequel:
- le niveau d'élévation de l'ouverture d'entrée de trémie (42) est supérieur au niveau d'élévation de l'ouverture de sortie (44) de la trémie;
- la machine d'alimentation en coussins (20) est capable de fabriquer des coussins d'emballage (26) à partir d'un matériau pour coussins (28);
- la machine d'alimentation en coussins (20) définit une sortie de coussins (34); et
- l'élévateur (22) est apte à déplacer la machine d'alimentation en coussins (20), entre:
- une position d'alimentation, dans laquelle le niveau d'élévation de la sortie de coussins (34) est supérieur au niveau d'élévation de l'ouverture d'entrée (42) de la trémie; et
- une position de rechargement dans laquelle la sortie de coussins (34) de la machine d'alimentation en coussins est à un niveau inférieur à celui de l'ouverture d'entrée (42) de la trémie.

2. Le système (10) selon la revendication 1 dans lequel la machine d'alimentation en coussins (20) est apte à fabriquer un chapelet de coussins.

3. Le système (10) selon la revendication 1 ou 2, dans lequel:
- la machine d'alimentation en coussins (20) comprend en outre un support de matériau (34) apte à supporter un stock de matériaux de coussins (28) pour fabriquer des coussins d'emballage; et
- à la position de rechargement, le support de matériau (36) est accessible manuellement depuis le niveau du sol pour recharger le stock de matériaux pour coussins (28).

4. Le système (10) selon la revendication 3 dans lequel la position de rechargement du support de matériau (36) est à un niveau inférieur à 213,36 cm au-dessus du niveau du sol.

5. Le système (10) selon l'une quelconque des revendications précédentes, dans lequel le niveau d'élévation de la sortie de coussins (34) à la position de rechargement est au moins à un niveau de 152,4 cm inférieur au niveau d'élévation de la sortie de coussins (34) à la position d'alimentation.

6. Le système (10) selon l'une quelconque des revendications précédentes dans lequel, à la position de rechargement, le niveau d'élévation de la sortie de coussins (34) est à un niveau inférieur au niveau de l'élévation de l'ouverture de sortie de trémie (44).

7. Le système (10) selon l'une quelconque des revendications précédentes comprenant en outre une soufflante installée en aval de la sortie de coussin (54) de la machine d'alimentation en coussins (20) et en amont de l'ouverture d'entrée (42) de la trémie, dans lequel la soufflante est apte à fournir un écoulement d'air pour assister le déplacement des coussins d'emballage de la sortie de coussins à l'ouverture d'entrée (42) de la trémie.

8. Le système (10) selon la revendication 7 comprenant en outre un trajet d'écoulement non fermé pour les coussins, venant de la sortie de coussins (34) de la machine d'alimentation en coussins (20) vers l'ouverture d'entrée (42) de la trémie.

9. Le système (10) selon l'une quelconque des revendications précédentes dans lequel l'élévateur (20) est composé d'un élévateur à vis de montée.

10. Le système (10) selon l'une quelconque des revendications précédentes dans lequel l'élévateur comprend:
- un cadre de tour (48),
- une vis supportée à rotation par le cadre de tour (48);
- une plate-forme (90) supportant la machine d'alimentation en coussins (20), dans lequel la plate-forme (90) vient en prise avec la vis et est adaptée de manière que la rotation de la vis dans un premier sens provoque la levée et que la rotation de la vis dans un deuxième sens opposé au premier sens provoque la descente de la plate-forme (90).

11. Le système (10) selon la revendication 10, comprenant en outre un moteur apte à faire tourner la vis.

12. Le système (10) selon l'une quelconque des revendications 1 à 9 dans lequel l'élévateur (22) comprend:
- un cadre de tour (48);
- des vis gauche et droite supportées à rotation par le cadre de tour (48);
- une plate-forme (90) supportant la machine d'alimentation en coussins (20), dans lequel la plate-forme vient en prise avec les vis gauche et droite et est adaptée de manière que la rotation des vis gauche et droite d'une première manière provoque la levée de la plate-forme (90) et la rotation des vis gauche et droite d'une deuxième manière opposée à la première manière, provoque l'abaissement de la plate-forme (90).

13. Le système (10) selon l'une quelconque des revendications précédentes, dans lequel l'élévateur (22) est composé d'un élévateur de hissage.

14. Le système (10) selon l'une quelconque des revendications 1 à 9, dans lequel l'élévateur comprend:
- un cadre de tour (48);
- une plate-forme (90) supportant la machine d'alimentation en coussins (20);
- un organe de câble supporté de façon déplaçable par le cadre de tour (48) et venant en prise avec la plate-forme (90), dans lequel l'organe de câble est apte à lever la plate-forme (90) pour placer la machine d'alimentation en coussins (20) dans la position d'alimentation et pour abaisser la plate-forme (90) pour placer la machine d'alimentation en coussins (20) à la position de rechargement.

15. Le système (10) selon l'une quelconque des revendications précédentes, dans lequel l'élévateur (22) est composé d'un élévateur hydraulique.

16. Le système (10) selon l'une quelconque des revendications précédentes, dans lequel l'ouverture de sortie (44) de la trémie est à au moins 91,44 cm au-dessus du niveau du sol.

17. Le système (10) selon l'une quelconque des revendications précédentes, dans lequel la trémie (24) est supportée au moins partiellement par l'élévateur (22), de préférence dans lequel la trémie (24) est complètement supportée par l'élévateur (22).

18. Le système (10) selon la revendication 1, comprenant en outre un poste d'emballage ou un convoyeur au-dessous de la trémie (24).

19. Le système (10) selon l'une quelconque des revendications précédentes, dans lequel l'élévateur (22) comprend un ou plusieurs réceptacles aptes à recevoir un organe sélectionné parmi une fourche d'un élévateur à fourche et une patte d'un vérin à palette.

20. Un procédé de fourniture de coussins d'emballage utilisant le système selon l'une quelconque des revendications précédentes, le procédé comprenant les étapes successives consistant à:
- activer l'élévateur (22) pour placer la machine d'alimentation en coussins (20) à la position de rechargement;
- charger la machine d'alimentation en coussins (20) avec du matériau pour coussins (28);
- activer l'élévateur (22) pour placer la machine d'alimentation en coussins (20) à la position d'alimentation; et
- démarrer la machine d'alimentation en coussins (20) pour fabriquer des coussins d'emballage dans la trémie (24).

21. Le procédé selon la revendication 20, dans lequel l'étape de chargement est accomplie par une personne se tenant au niveau du sol.

22. Le procédé selon la revendication 20 ou 21, dans lequel la machine d'alimentation en coussins (20) fabrique un chapelet de coussins d'emballage dans la trémie.
